# EUROPEAN PATENT SPECIFICATION

(11) **EP 3 078 757 B1**
(45) Date of publication and mention of the grant of the patent: **28.08.2019**
(21) Application number: 15740973.1
(22) Date of filing: 23.01.2015
(51) Int. Cl.: C22B 59/00, B09B 3/00, C01F 17/00, C22B 7/00, C22B 21/00, C25B 1/26

(54) **SCANDIUM CHLORIDE AND SCANDIUM CHLORIDE PRODUCTION METHOD**
SCANDIUMCHLORID UND SCANDIUMCHLORIDHERSTELLUNGSVERFAHREN
CHLORURE DE SCANDIUM ET PROCÉDÉ DE PRODUCTION DE CHLORURE DE SCANDIUM

(30) Priority: 27.01.2014 JP 2014012665
(43) Date of publication of application: 12.10.2016
(73) Proprietor: Sumitomo Metal Mining Co., Ltd., Tokyo 105-8716 (JP)
(72) Inventor: TAKAHASHI, Jun-ichi, Niihama-shi Ehime 792-0002 (JP); OZAKI, Yoshitomo, Niihama-shi Ehime 792-0002 (JP)
(74) Representative: Jones, Nicholas Andrew
(86) International application number: PCT/JP2015/051826
(87) International publication number: WO 2015/111696

(56) References cited:
- CN-A- 102 021 343
- JP-A- H05 171 304
- JP-A- H09 291 320
- JP-A- 2007 254 822
- JP-A- 2012 041 588
- US-A- 2 874 039
- US-A- 3 235 376
- US-A- 5 039 336
- US-A1- 2012 207 656
- WEIWEI WANG ET AL: "Metallurgical processes for scandium recovery from various resources: A review", HYDROMETALLURGY, ELSEVIER SCIENTIFIC PUBLISHING CY. AMSTERDAM, NL, vol. 108, no. 1, 5 March 2011 (2011-03-05) , pages 100-108, XP028201019, ISSN: 0304-386X, DOI: 10.1016/J.HYDROMET.2011.03.001 [retrieved on 2011-03-17]
- NOBUYOSHI IYATOMI ET AL.: 'Intelligent Metallurgy of Rare Metals, Scandium' BULLETIN OF THE RESEARCH INSTITUTE OF MINERAL DRESSING AND METALLURGY vol. 45, no. 1, 30 September 1989, pages 66 - 76, XP008181281

## Description

### TECHNICAL FIELD

The present invention relates to a scandium chloride and scandium oxide production method, and in more detail, relates to a method of recovering a scandium concentrate from an alloy containing scandium and aluminum.

### BACKGROUND ART

Aluminum scandium alloys containing aluminum and scandium (hereinafter also referred to as "Al-Sc alloy") have a characteristic of being light weight and high strength, and in addition to sports articles, have been used in fields requiring shock resistance. Additionally, in the future, applications as a structural material for aircraft, electric vehicles, high-speed rail, etc. are also expected. However, since the production volume of scandium is very small, scandium is extremely high cost. For this reason, it is not easy to broadly apply scandium industrially.

In recent years, the technology for recovering scandium that accompanies nickel oxide ore in a very small amount has progressed, and it is becoming possible to stably obtain larger amounts of scandium than before. However, to recover scandium from nickel oxide ore, since multiple processes such as ion exchange, solvent extraction, neutral precipitation and calcination are required, the matter of scandium being high cost does not change even if using this technology.

However, since scandium is easily oxidized but has a high melting point, it is not possible to obtain Al-Sc alloy by simply melting scandium and aluminum. Therefore, generally a technique has been adopted to add, to molten aluminum, scandium oxide while reducing with metals such as calcium to obtain a master alloy having a scandium quality on the order of 1-2%, and then diluting this with aluminum to obtain the intended Al-Sc alloy. In addition, it has also been proposed to produce a scandium master alloy with halogenated scandium as the raw material (refer to Patent Document 1). As a first technique for separating scandium from Al-Sc alloy, it has been considered to perform a process in the reverse direction to the process described in Patent Document 1.

In addition, as a second technique, a method of recovering high-purity scandium oxide using solvent extraction from a hydrochloric acid solution containing scandium has been proposed (refer to Patent Document 2). Weiwei Wang et al (Hydrometallurgy, 108(1), 2011-03-05, pages 100-108) discloses a recovery process for scandium from Al, fe and Mg alloys with HCl and HDEHP. CN102021343 discloses a recovery process from aluminium scandium alloy through generation of scandium hydroxide and decomposition by HCl.

Patent Document 1: Japanese Unexamined Patent Application, Publication No. 2003-171724Patent Document 2: Japanese Unexamined Patent Application Publication No. H09-291320

### DISCLOSURE OF THE INVENTION

### Problems to be Solved by the Invention

However, the matter of performing a process in the reverse direction to the first technique, i.e. the process described in Patent Document 1, is not easy to practically
realize from the viewpoint of industrial facilities and cost. In addition, with the second technique, dissolving scandium in an acid solution is not easy, and labor and cost is required in passing through the step of solvent extraction. Additionally, not only scandium and aluminum, but various components including zinc are often contained in alloys, and there is also a problem in requiring labor in the separation of these various elements. In this way, an Al-Sc alloy recycling technique, i.e. method of efficiently separating from Al-Sc alloy into aluminum and scandium, has yet to be found.

The present invention has been made in order to sole the above such problems, and an object thereof is to efficiently separate from Al-Sc alloy into aluminum and scandium.

As a result of accumulating intensive research to solve the above-mentioned problems, the present inventors found that the above-mentioned object could be achieved by heating an Al-Sc alloy to 300°C to 700°C under a chlorine gas atmosphere, thereby arriving at completion of the present invention.

### Means for Solving the Problems

More specifically, the present invention provides the following matters.

A first aspect of the present invention is a scandium chloride production method including: a heating step of heating an alloy containing scandium and aluminum to 300°C to 700°C for 20 to 90 minutes under a chlorine gas atmosphere; and a scandium chloride recovery step of recovering scandium chloride from a solid
phase, after the heating step.

In addition, according to a second aspect of the present invention, the scandium chloride production method as described in the first aspect further includes: a hydrogen chloride generation step of bringing hydrogen gas into contact with aluminum chloride obtained from the heating step to generate hydrogen chloride; and a chlorine gas generation step of generating chlorine gas by electrolyzing the hydrogen chloride, in which the chlorine gas used in the heating step contains chlorine gas obtained from the chlorine gas generation step.

Furthermore, a third aspect of the present invention is a scandium oxide production method including: a scandium oxide recovery step of recovering scandium oxide by dissolving the scandium chloride recovered by the method as described in the first or second aspect to obtain a scandium solution, followed by adding oxalic acid to the scandium solution to make scandium oxalate, and oxidizing the scandium oxalate.

### Effects of the Invention

According to the present invention, it is possible to efficiently recover scandium from an Al-Sc alloy.

### BRIEF DESCRIPTION OF THE DRAWINGS

FIG. 1 shows a vapor pressure curve between the dimer of aluminum chloride (Al₂Cl₆) and scandium chloride (ScCl₃); and
FIG. 2 is a schematic view showing an example of a reaction apparatus 1.

### PREFERRED MODE FOR CARRYING OUT THE INVENTION

Hereinafter, a specific embodiment of the present invention will be explained in detail; however, the present invention is not to be limited in any way to the following embodiment, and can be realized by applying appropriate modifications within the scope of the object of the present invention. It should be noted that places where explanation would be redundant, the explanation may be omitted as appropriate, but is not to limit the gist of the invention.

### <Scandium Chloride Production Method>

The scandium chloride production method according to the present invention includes: a heating step of heating an alloy containing scandium and aluminum to 300°C to 700°C in a chloride gas atmosphere, and a scandium chloride recovery step of, after this heating step, recovering scandium chloride from the solid phase.

### (Heating Step)

Aluminum and scandium both become chlorides in a high-temperature chlorine gas atmosphere.

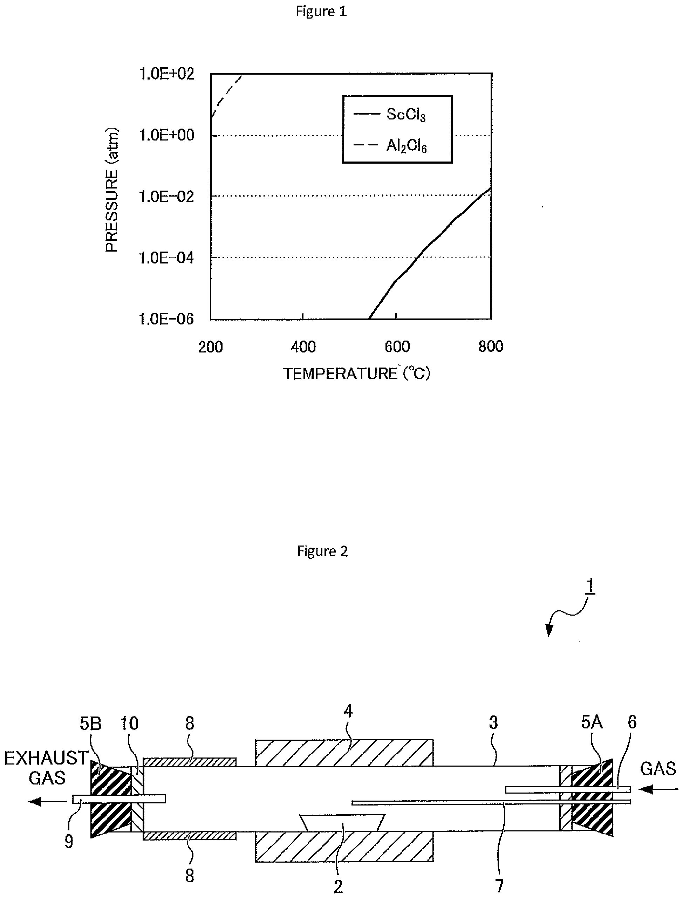

FIG. 1 is a vapor pressure curve between a dimer of aluminum chloride (Al₂Cl₆) and scandium chloride (ScCl₃). The saturated vapor pressure is a value calculated based on the Antoine equation.

According to the vapor pressure curve of FIG. 1, it is found that the saturated vapor pressure of aluminum chloride is high even at relative low temperature and is at least 1 atm even at 200°C; whereas, the saturated vapor pressure of scandium chloride is on the order of 10⁻⁴ even at 700°C, and hardly volatilizes under atmospheric pressure.

The present invention was made employing the property of the saturated vapor pressures greatly differing between aluminum chloride and scandium chloride. When heating the Al-Sc alloy to 300°C to 700°C for 20 to 90 minutes under a chlorine gas atmosphere, Al is removed by vaporizing as a dimer of aluminum chloride (Al₂Cl₆) by the chlorination reaction. On the other hand, Sc remains as is without vaporizing as scandium chloride (ScCl₃). For this reason, by heating the Al-Sc alloy to a predetermined temperature under a chlorine gas atmosphere, it is possible to separate the Al-Sc alloy into aluminum chloride as the vapor phase and scandium chloride as the solid phase.

When considering only separating into aluminum chloride as the vapor phase and scandium chloride as the solid phase, the heating temperature is believed to be sufficient if 200°C to 800°C; however, when considering the reaction time, recovery rate, etc., the heating temperature is preferably 300°C to 700°C. If the heating temperature is no higher than 300°C, even if the Al-Sc alloy could be gas-solid separated into aluminum chloride and scandium chloride, it would not be preferable because time would be required in the chlorination reaction, and thus the efficiency would be poor. On the other hand, if the heating temperature exceeds 700°C, it is not preferable because the scandium chloride may partially vaporize and the recovery rate would decrease. In addition, it is not preferable in the point of the corrosion rate of the reaction apparatus increasing due to chlorine, and thus requiring the selection of high-cost apparatus materials.

The heating time (time maintaining at 300°C to 700°C) is preferably at least 20 minutes to no more than 90 minutes, and is more preferably at least 50 minutes to no more than 70 minutes. If the heating time is shorter than 20 minutes, it is not preferable because there will be a possibility of not being able to satisfactorily gas-solid separate the Al-Sc alloy into aluminum chloride and scandium chloride. If longer than 90 minutes, it is not preferable in the point of the cost of gas-solid separating possibly becoming high cost.

### (Recovery Step)

The recovery step is a step of recovering scandium chloride from the solid phase after the heating step. In the recovery step, it is possible to not only recover scandium chloride from the solid phase, but also to recover aluminum chloride from the vapor phase. Additionally, by bringing hydrogen gas into contact with the aluminum chloride, it is not only possible to recover high-purity aluminum metal from the Al-Sc alloy, but also obtain chlorine gas by electrolyzing hydrogen chloride, which is a byproduct, whereby this chlorine gas can be reused as the chlorine gas used in the above-mentioned heating step. In addition, by providing the scandium chloride obtained in the recovery step to the above-mentioned heating step again, it is possible to further raise the purity of scandium
contained in the recovered material.

### <Scandium Oxide Production Method>

The scandium oxide production method of the present invention includes a scandium oxide recovery step of dissolving the scandium chloride recovered by the above-mentioned <Scandium Chloride Production Method> to obtain a scandium solution, followed by adding oxalic acid to the scandium solution to make scandium oxalate, and oxidizing this scandium oxalate to recover scandium oxide.

When considering the usefulness upon reusing scandium concentrate, stability upon storing scandium concentrate, labor, etc., it is more preferable to store scandium concentrate in the form of scandium oxide than storing in the form of scandium chloride.

Although the above-mentioned technique described in Patent Document 2 can be exemplified as a technique for recovering scandium oxide from the raw material, it is first necessary to subject the raw material to solvent extraction due to the proportion of scandium contained in the raw material at first being very low. However, if using the scandium chloride recovered by the present invention, since it is unnecessary to solvent extract the raw material, and the raw material is a chloride, it is possible to dissolve with simply water. Subsequently, oxalic acid is added to the scandium aqueous solution to make scandium oxalate, and this scandium oxalate is oxidized, whereby it can be recovered as scandium oxide.

### EXAMPLES

Hereinafter, the present invention will be explained in further detail by way of examples; however, the present invention is not to be subjected to any limitations in these descriptions.

### <Example>

FIG. 2 is a schematic drawing illustrating the configuration of the reaction apparatus 1 used in the present examples. The reaction apparatus 1 includes: an alumina plate 2 on which the Al-Sc alloy that is the sample is placed; a quartz furnace core tube 3 that keeps the sample in a chlorine gas atmosphere; a horizontal electric furnace 4 that heats this quartz furnace core tube 3; rubber stoppers 5A, 5B that seal both ends of the quartz furnace core tube 3; a gas supply unit 6 that supplies gas to the inside of the quartz furnace core tube 3 through a tube insertion part (not illustrated) provided in the rubber stopper 5A on the inlet side; a thermocouple 7 inserted inside of the quartz furnace core tube 3 through a thermocouple insertion part (not illustrated) provided in the rubber stopper 5A on the inlet side; an aluminum chloride recovery unit 8 that is provided on the outlet side, and recovers the vaporized aluminum chloride by watercooling; a gas exhaust unit 10 that exhausts the vapor that is inside of the quartz furnace core tube 3 through a tube insertion part (not illustrated) provided to the rubber stopper 5B on the outlet side; and an insulation board 11 that maintains the adiabicity of the inside of the quartz furnace core tube 3.

On a 99% purity alumina plate 2, 50 g of scrap Al-Sc alloy with Sc quality of 1 wt% was placed, and this alumina plate 2 was set in the horizontal electric furnace 4 that can adjust the atmosphere using the quartz furnace core tube 3 of the structure shown in FIG. 2. In order to keep the atmosphere inside of the quartz furnace core tube 3 inert, high-purify nitrogen gas was flowed from a compressed gas cylinder through the gas supply unit 6 to substitute the atmosphere inside of the quartz furnace core tube 3, followed by heating until the inside of the horizontal electric furnace 4 reached 500°C while continuing the flow of nitrogen gas, switching the gas from nitrogen to chlorine gas while maintaining at 500°C, and holding for 60 minutes while flowing at a rate of 0.5 L/min.

Subsequently, the gas supplied through the gas supply unit 6 was switched again from chlorine gas to nitrogen gas, as well as shutting off the power source of the horizontal electric furnace 4, and cooling the sample inside of the horizontal electric furnace 4. After the sample reached room temperature, the sample remaining on the alumina plate 2, and the adhered substance recovered from the aluminum chloride recovery unit 8 were retrieved.

The sample remaining on the alumina plate 2 and the adhered substance recovered from the aluminum chloride recovery unit 8 were respectively dissolved, and mass spectroscopy was performed using an ICP mass spectrometer. As a result thereof, the scandium quality of the sample remaining on the alumina plate 2 was 27.5 wt%. This corresponds to 92% by ScCl₃ conversion.

On the other hand, the scandium quality of the adhered substance recovered in the aluminum chloride recovery unit 8 was less than 0.5 wt%. Based on this, almost the entire amount of adhered substance is considered to be a chloride of aluminum.

Based on the present Example, it was confirmed that it is possible to separate into a high-purity scandium concentrate and aluminum concentrate by passing through a heating step of heating an alloy containing scandium and aluminum to 300°C to 700°C under a chlorine gas atmosphere, and a scandium chloride recovery step of recovering scandium chloride from the solid phase after this heating step.

### EXPLANATION OF REFERENCE NUMERALS

- 1: reaction apparatus
- 2: alumina plate
- 3: quartz furnace core tube
- 4: horizontal electric furnace
- 5A, 5B: rubber stopper
- 6: gas supply unit
- 7: thermocouple
- 8: aluminum chloride recovery unit
- 9: gas exhaust unit
- 10: insulation board

## Claims

1. A scandium chloride production method comprising:
a heating step of heating an alloy containing scandium and aluminum to 300°C to 700°C for 20 to 90 minutes under a chlorine gas atmosphere; and
a scandium chloride recovery step of recovering scandium chloride from a solid phase, after the heating step.

2. The scandium chloride production method according to claim 1, further comprising:
a hydrogen chloride generation step of bringing hydrogen gas into contact with aluminum chloride obtained from the heating step to generate hydrogen chloride; and
a chlorine gas generation step of generating chlorine gas by electrolyzing the hydrogen chloride,
wherein the chlorine gas used in the heating step contains chlorine gas obtained from the chlorine gas generation step.

3. A scandium oxide production method comprising: a scandium oxide recovery step of recovering scandium oxide by dissolving the scandium chloride recovered by the method according to claim 1 or 2 to obtain a scandium solution, followed by adding oxalic acid to the scandium solution to make scandium oxalate, and oxidizing the scandium oxalate.

## Patentansprüche

1. Verfahren zur Herstellung von Scandiumchlorid, umfassend:
einen Erwärmungsschritt zum Erhitzen einer Legierung, die Scandium und Aluminium enthält, auf 300 °C bis 700 °C während 20 bis 90 Minuten unter einer Chlorgasatmosphäre, und
einen Schritt zum Gewinnen von Scandiumchlorid nach dem Erwärmungsschritt, wobei Scandiumchlorid aus einer Feststoffphase gewonnen wird.

2. Verfahren zur Herstellung von Scandiumchlorid nach Anspruch 1, weiter umfassend:
einen Schritt zum Erzeugen von Chlorwasserstoff, wobei Wasserstoffgas mit Aluminiumchlorid in Kontakt gebracht wird, das aus dem Erwärmungsschritt erhalten wurde, so dass Chlorwasserstoff erzeugt wird, und
einen Schritt zum Erzeugen von Chlorgas, wobei Chlorgas durch Elektrolysieren des Chlorwasserstoffs erzeugt wird,
wobei das Chlorgas, das im Erwärmungsschritt eingesetzt wird, Chlorgas enthält, das aus dem Schritt zum Erzeugen von Chlorgas erhalten wurde.

3. Verfahren zur Herstellung von Scandiumoxid, umfassend:
einen Schritt zum Gewinnen von Scandiumoxid, wobei durch Auflösen des mit dem Verfahren nach Anspruch 1 oder 2 gewonnenen Scandiumchlorids, so dass eine Scandiumlösung erhalten wird, gefolgt vom Zugeben von Oxalsäure zur Scandiumlösung, so dass Scandiumoxalat gebildet wird, und Oxidieren des Scandiumoxalats Scandiumoxid gewonnen wird.

## Revendications

1. Procédé de production de chlorure de scandium comprenant :
une étape de chauffage de chauffer un alliage contenant du scandium et de l'aluminium à une température de 300°C à 700°C pendant 20 à 90 minutes dans une atmosphère de chlore gazeux ; et
une étape de récupération de chlorure de scandium de récupérer du chlorure de scandium à partir d'une phase solide, après l'étape de chauffage.

2. Procédé de production de chlorure de scandium selon la revendication 1, comprenant en outre :
une étape de génération de chlorure d'hydrogène de mettre de l'hydrogène gazeux en contact avec le chlorure d'aluminium obtenu à partir de l'étape de chauffage pour générer du chlorure d'hydrogène ; et
une étape de génération de chlore gazeux de générer du chlore gazeux par électrolyse du chlorure d'hydrogène,
dans lequel le chlore gazeux utilisé dans l'étape de chauffage contient du chlore gazeux obtenu à partir de l'étape de génération de chlore gazeux.

3. Procédé de production d'oxyde de scandium comprenant : une étape de récupération d'oxyde de scandium de récupérer de l'oxyde de scandium par dissolution du chlorure de scandium récupéré par le procédé selon la revendication 1 ou 2 pour que soit obtenue une solution de scandium, opération suivie de l'addition d'acide oxalique à la solution de scandium pour produire de l'oxalate de scandium, et d'une oxydation de l'oxalate de scandium.
